# EUROPÄISCHE PATENTSCHRIFT

(11) **EP 0 248 198 B1**
(45) Veröffentlichungstag und Bekanntmachung des Hinweises auf die Patenterteilung: **14.07.1993**
(21) Anmeldenummer: 87106056.2
(22) Anmeldetag: 25.04.1987
(51) Int. Cl.: H01J 9/00, H01J 9/50, B03B 9/06

(54) **Anlage zur Entsorgung von Leuchtstoff- und Gasdrucklampen**
Installation for the disposal of fluorescent and gas-pressurized lamps
Installation pour la mise au rebut de lampes fluorescentes ou des lampes sous pression de gaz

(30) Priorität: 31.05.1986 DE 3618434
(43) Veröffentlichungstag der Anmeldung: 09.12.1987
(73) Patentinhaber: Herborn, Paul, D-65388 Schlangenbad (DE)
(72) Erfinder: Herborn, Paul, D-65388 Schlangenbad (DE)
(74) Vertreter: Blumbach Weser Bergen Kramer

(56) Entgegenhaltungen:
- EP-A- 0 157 249
- DE-A- 3 412 767
- FR-A- 2 532 564
- PATENT ABSTRACTS OF JAPAN, Band 1, Nr. 89, 18. August 1977, Seite 2348 M 77 & JP-A-52 33 387 (HITACHI SEISAKUSHO K.K.) 14-03-1977

## Beschreibung

Leuchtstoff- und Gasdrucklampen gehören nach dem Abfallkatalog der Länderarbeitsgemeinschaft zu "Glas- und Keramikabfällen mit spezifischen Beimischungen". Bei der Entsorgung verbrauchter Lampen dieser Art entsteht daher Sonderabfall, der nur auf Sondermülldeponien abgelagert werden darf. Besonders gefährlich sind die bei der Zertrümmerung der Lampen freiwerdenden Schwermetallstäube und -dämpfe, insbesondere in Form von Quecksilber und Quecksilberverbindungen. Die Zertrümmerung der Lampen ist dabei zum einen wegen der schon beim Transport und später bei der Ablagerung auftretenden Stöße kaum zu vermeiden, zum anderen zur Platzeinsparung aber auch nötig.

In FR-A-2 532 564 ist eine Anlage zur Entsorgung von Leuchtstofflampen beschrieben, in der die Lampen einem in einem geschlossenen Gehäuse umlaufenden Schlagrad zum Zerbrechen zugeführt werden. Glasbruchstücke und Fassungsteile werden getrennt und fallen in verschiedene Behälter. An das Schlagradgehäuse, in dem auch das Sortieren stattfindet, ist eine Absaugvorrichtung mit Staubfilter angeschlossen. Die Abluft wird zur Beseitigung schädlicher Gase und Dämpfe einem Aktivkohlefilter zugeführt.

Der Erfindung liegt die Aufgabe zugrunde, eine Anlage zur Entsorgung von Leuchtstoff und Gasdrucklampen zu schaffen, die eine Umweltbelastung insbesondere durch gefährliche Schadstoffe vermeidet und die Wiederverwendung verwertbarer Rohstoffe ermöglicht. Der Gesamtbauaufwand soll dabei so klein bleiben, daß ein mobiler Einsatz möglich ist.

Die Lösung der Aufgabe wird durch die im Anspruch 1 angegebenen Merkmale erreicht.

Durch das Zerbrechen der Lampen in einem geschlossenen Gehäuse, das an eine Absaugvorrichtung angeschlossen ist und damit unter Unterdruck steht, wird vermieden, daß die beim Zerbrechen freiwerdenden Stäube und Gase ins Freie gelangen und die Umwelt belasten. Das magnetische Aussortieren der Fassungsteile wird dadurch ermöglicht, daß bei allen praktisch vorkommenden Leuchtstoff- und Gasdrucklampen wenigstens Teile der Fassung und der damit verbundenen Elektroden aus Stahl oder Eisen bestehen. Die Trennung von den nichtmagnetischen Bruchstücken, vorwiegend Glas, ermöglicht auch eine Wiederverwendung der anfallenden Rohstoffe. Durch die Erhitzung der nichtmagnetischen Bruchstücke werden die noch anhaftenden Schwermetallstäube und auch Leuchtstoffe abgespalten oder verdampft, und es bleibt als wiederverwertbarer Rohstoff im wesentlichen Glas zurück. Die schädlichen Stäube werden im Filter der Absaugvorrichtung zurückgehalten und gesammelt, so daß sie sicher in Behältern entsorgt werden können. Quecksilber kann gegebenenfalls durch ein getrenntes Destillationsverfahren wiedergewonnen werden. Das nachgeschaltete Aktivkohlefilter beseitigt schädliche Gase und Dämpfe. Da die Anlage mit allen Teilen, in denen schädliche Bestandteile anfallen, unter Unterdruck steht, können die schädlichen Teile nicht unkontrolliert ins Freie gelangen. Insgesamt läßt sich die Anlage dabei so kompakt bauen, daß trotz hoher Leistung von beispielsweise der Entsorgung von 2000 Leuchtstofflampen pro Stunde ein mobiler Aufbau auf einem Lastkraftwagen üblich ist. Dann kann die Anlage zur Entsorgung von Lampen jeweils zu Sammelpunkten gefahren werden, so daß ein längerer Transport mit Bruchgefahr für die Lampen nicht erforderlich ist.

Weiterbildungen der Erfindung sind Gegenstand der Unteransprüche. So kann zweckmäßig das Schlagrad an einer horizontal gelagerten Welle eine Vielzahl von radial abstehenden Schlagarmen aufweisen, die in mehreren, gleichmäßigen axialen Abstand besitzenden Reihen angeordnet sind. Zum Einbringen der zu entsorgenden Lampen besitzt das Gehäuse zweckmäßig einen in Richtung zum Schlagrad geneigten Einlauftisch, der die Lampen durch einen Gehäuseschlitz zum Schlagrad führt. Dabei ist der Einlauftisch an seiner dem Schlagrad zuweisenden Kante mit kammartig angeordneten Winkeln versehen, die die Bewegung der Lampen begrenzen. Die Lampen liegen dann zweckmäßig parallel zur Welle des Schlagrades derart, daß die Enden der Schlagarme zwischen den Winkeln durchlaufen und die Lampen auf ihrer gesamten Länge gleichzeitig zerbrechen.

Für ein geordnetes und gleichmäßiges Zerbrechen der Lampen wird in Weiterbildung der Erfindung oberhalb des Einlauftisches im Bereich des Gehäuseschlitzes eine mit einem Reibbelag versehene Walze parallel zum Tisch angeordnet, wobei deren Abstand vom Tisch auf den Durchmesser der Lampen einstellbar ist. Die Walze wird mit einer solchen Drehrichtung angetrieben, daß die Lampen entgegen ihrer Einlaufrichtung zurückgehalten werden . Dann kann jeweils nur immer eine Lampe die Walze passieren und zum Schlagrad rollen. Zur Vermeidung von Verstopfungen wird im Trichter des Gehäuses zweckmäßig ein Rührer in Form einer Welle mit radial abstehenden Armen angeordnet.

Für die praktische Verwirklichung der Sortiereinrichtung bestehen mehrere Möglichkeiten, wobei jedoch im Hinblick darauf, daß die Fassungen oder Kappen der Lampen magnetisches Material enthalten, eine magnetische Abtrennung oder Sortierung vorgenommen wird. In weiterer Ausbildung der Erfindung kann dabei vorgesehen sein, daß die Sortiereinrichtung ein horizontal zwischen zwei Umlenkwalzen umlaufendes Transportband aufweist, auf dessen oberes Drum der Trichter des Gehäuses mündet. Ein dem Transportband zugeordneter Magnet sondert dann die Fassungsteile aus den unmagnetischen Bruchstücken aus. Der Magnet oder mehrere Magnete können dabei oberhalb oder seitlich vom Transportband angeordnet sein. Eine vorteilhafte Weiterbildung empfiehlt jedoch, daß die Umlenkwalze, auf die das obere Drum mit den aufgeschütteten Bruchstücken zuläuft, einen Magneten enthält, derart, daß die Fassungsteile bis zum unteren Ablaufpunkt des Bandes von der Walze magnetisch festgehalten werden und dann in einen Fassungs- oder Kappentrichter fallen, während die unmagnetischen Bruchstücke im oberen Bereich der Umlenkwalze vom Band in einen Glastrichter gefördert werden. Das Transportband muß aus sehr widerstandsfähigem, aber unmagnetischen Material bestehen. Es kann beispielsweise aus nichtrostenden, unmagnetischen Stahlfäden gewebt oder geflochten sein.

Um die Fassungen oder Kappen aus dem Unterdruckbereich herauszuführen und in ihr Silo zu fördern, wird empfohlen, daß der Kappentrichter in eine Zellenradschleuse mündet und die Kappen am Ausgang der Schleuse mittels Druckluft durch ein Rohr gefördert werden. Die Zellenradschleuse stellt dabei sicher, daß der Unterdruck in der Anlage erhalten bleibt und andererseits eine Förderung mit Druckluft in einfacher Weise möglich ist.

Für die Förderung der unmagnetischen Bruchstücke, also im wesentlichen der Glasteile des Lampenkolbens bzw. -rohres, wird empfohlen, daß der Glastrichter in einen Schneckenförderer mündet, an dessen Ausgang eine Saugluftleitung angeschlossen ist, die die unmagnetischen Bruchstücke zum Heizraum fördert. Auf diese Weise läßt sich zum einen eine sichere Förderung erreichen, zum anderen aber außerdem eine weitere Zerkleinerung zu großer Bruchstücke durchführen. Die Schnecke des Förderers besitzt zur Vermeidung von Verklemmungen mit Vorteil großes radiales Spiel im Gehäuse und ist am Rand mit Nocken versehen, die eine Rühr- und Brechwirkung mit sich bringen. Das Gehäuse oberhalb der Schnecke soll dabei einen Luftdurchgangskanal mit großem Querschnitt bilden, so daß ein großes Luftvolumen über den Schneckenförderer und die Sortiereinrichtung aus dem Schlagradgehäuse unter Aufrechterhaltung des Unterdrucks gesaugt werden kann und gleichzeitig eine gute Förderleistung für die nichtmagnetischen Bruchstücke erzielt wird. Wenn die Luftgeschwindigkeit im Schneckenförderer und in der Sortiereinrichtung zur Beruhigung verringert werden soll, kann zwischen dem Ausgang des Schneckenförderers und dem Schlagradgehäuse eine Bypaßleitung vorgesehen sein, so daß insgesamt das Absaugvolumen gleichbleibt. Am Ausgang des Schneckenförderers ist zur Vermeidung von Verklemmungen im Gehäuse des Förderers ein mit der Schnecke umlaufender Rührer angeordnet, der wiederum aus radial abstehenden Armen gebildet sein kann.

Zur wirksamen Abscheidung des Staubes aus den nichtmagnetischen Bruchstücken wird in Weiterbildung der Erfindung vor dem Heizraum ein Abscheider angeordnet, in den die nichtmagnetischen Bruchstücke gefördert werden. Der Abscheider kann dabei außerdem ein Sieb mit einer solchen Maschenweite enthalten, daß gegebenenfalls nicht ausgesonderte Fassungsteile zurückgehalten werden. Die Absaugvorrichtung ist an den Abscheider angeschlossen und fördert über die Saugluftleitung die unmagnetischen Bruchstücke in den Abscheider. Gleichzeitig nimmt die Abluft den Staub mit, der dann in der Absaugvorrichtung ausgefiltert wird. Der Abscheider besitzt zur Erzielung eines guten Wirkungsgrades zweckmäßig einen oberen zylindrischen Abschnitt, an dessen Deckel die Absaugvorrichtung angeschlossen ist. Die Saugleitung mündet tangential in den zylindrischen Abschnitt, so daß sich ein Wirbel ergibt. An den zylindrischen Abschnitt schließt sich nach unten ein Trichter an, der über eine Zellenradschleuse zum Heizraum führt. Der Heizraum ist damit vom Unterdruckbereich abgetrennt und kann eine eigene Belüftung oder Absaugung erhalten.

Im Heizraum werden die nichtmagnetischen Bruchstücke, also insbesondere Glasstücke, zum Verdampfen anhaftender schädlicher Stoffe erhitzt. Das kann beispielsweise mit heißer Luft oder durch direktes oder indirektes Aufheizen mit Hilfe eines elektrischen Heizregisters erfolgen. Eine zweckmäßige Weiterbildung der Erfindung sieht dazu vor, daß der Heizraum ein Ofen mit einem kegelförmigen Gehäuse ist, an dessen Spitze eine Einfüllöffnung für die unmagnetischen Bruchstücke angeordnet ist. In dem Gehäuse ist gleichachsig ein Innenkegel mit Abstand von der Gehäusewand befestigt, und am unteren Rand befindet sich zwischen dem Gehäuse und dem Innenkegel ein Gasringbrenner. Dann fallen die Bruchstücke an den Wänden des Innenkegels entlanggleitend zum Ringbrenner und werden zuerst von den heißen Abgasen und später direkt von den Flammen des Ringbrenners so hoch erhitzt, daß alle anhaftenden Oberflächenteile verdampfen oder abgesprengt werden. Der axiale Abstand zwischen dem kegelförmigen Gehäuse und dem Innenkegel soll dabei einstellbar sein, damit der Spalt, durch den die Bruchstücke fallen, so gewählt werden kann, daß einerseits die Bruchstücke nicht verklemmen, andererseits aber eine gute Heizwirkung eintritt.

Zur kontrollierten Beseitigung der Brennerabgase und der schädlichen Dämpfe führt zweckmäßig ein Abzweig der Saugvorrichtung in den Bereich der Einfüllöffnung. Unter dem Heizraum kann ein Trichter angeordnet sein, der in eine Zellenradschleuse mündet. Am Ausgang dieser Schleuse können dann die Bruchstücke mit Druckluft über ein Rohr in ihr Silo gefördert werden, ohne daß das Absaugsystem des Heizraums gestört wird.

Eine praktisch vollständige Beseitigung der gasförmigen Schadstoffe läßt sich dadurch erreichen, daß die Abluftleitungen der Silos über Aktivkohlefilter geführt sind. In gleicher Weise kann die Abluft der Absaugvorrichtung über ein solches Aktivkohlefilter führen. Ein solches zusätzliches Filter läßt sich in Weiterbildung der Erfindung dadurch vermeiden, daß die Abluft der Absaugvorrichtung als Zuluft einem Gebläse zur Lieferung der Druckluft zugeführt wird. Dadurch wird nicht nur die Abluft der Absaugvorrichtung mittels der Aktivkohlefilter der Silos gefiltert, sondern gleichzeitig die Abluftwärme der Absaugvorrichtung ausgenutzt und der Ausgangsdruck des Druckluftgebläses erhöht.

Eine zusätzliche Verringerung der Schadstoffbelastung läßt sich erreichen, wenn die Silos nach Abstellen der Anlage mit vorzugsweise heißer oder warmer Luft nachbelüftet werden.

Ein Ausführungsbeispiel der Erfindung wird anhand der Zeichnungen beschrieben. Es zeigen:
- Fig. 1: eine schematische Darstellung einer Anlage nach der Erfindung;
- Fig. 2: schematisch eine Sortiereinrichtung, die bei der Anlage nach Fig. 1 Verwendung findet;
- Fig. 3: schematisch die Aufsicht eines Schneckenförderers für die Anlage gemäß Fig. 1.

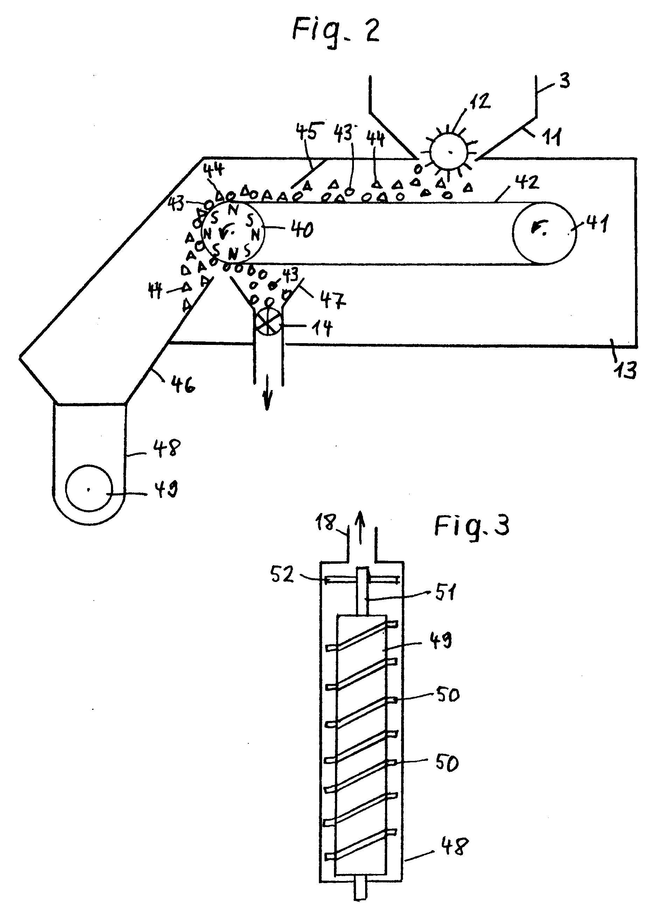

Die zu entsorgenden Leuchtstofflampen 1 werden auf einen Einlauftisch 2 aufgelegt. Dabei geht die nachfolgende Beschreibung davon aus, daß es sich bei den Lampen 1 um übliche Leuchtstofflampen in Röhrenform handelt, die an beiden Enden je eine Metallkappe mit Fassungsstiften besitzen. Bei anderen Lampen, beispielsweise solchen in Ringform oder auch Gasdrucklampen in Kolbenform, ist eine entsprechende Anpassung des Einlauftisches und der nachfolgenden Teile erforderlich.
Die Lampen 1 gelangen in ein Gehäuse 3,
in welchem ein Schlagrad 4 mit horizontal gelagerter Welle umläuft. Um zum Schlagrad 4 zu gelangen, müssen die Lampen 1 unter einer mit einem Reibbelag (nicht gezeigt) versehenen Walze 6 durchlaufen, die in Richtung des Pfeils 7 angetrieben ist. Es kann dann immer nur eine Lampe 1 unter der Walze 6 durchrollen und über einen Schlitz 8 zum Schlagrad 4 gelangen. Wie in der Zeichnung nur angedeutet ist, besitzt der Einlauftisch 2 am unteren Ende kammartige Abwinkelungen 9, gegen die die Lampe 1 rollt. Sie wird dann dort auf ihrer gesamten Länge gleichzeitig mittels Schlagarmen 10 zerbrochen, die radial vom Schlagrad 4 abstehen und durch die Zwischenräume zwischen den kammartigen Abwinklungen hindurchlaufen. Die Bruchstücke fallen in einen Trichter 11, in dessen Auslauf zur Vermeidung von Verstopfungen ein Rührwerk 12 angeordnet ist. Es schließt sich eine Sortiereinrichtung 13 an, in der die Fassungsteile der Lampen magnetisch von den unmagnetischen Bruchstücken , in der Hauptsache Glas, getrennt werden. Die Arbeitsweise der Sortiereinrichtung 13 wird nachfolgend anhand von Fig. 2 noch genauer erläutert.

Die ausgesonderten Fassungsteile der Lampen 1 verlassen die Sortiereinrichtung 13 über eine nur schematisch dargestellte Zellenradschleuse 14. Es handelt sich dabei in bekannter Weise um ein walzenföriges Rad, das durch achsparallele Wände in eine Anzahl von trichterförmigen Zellen unterteilt ist. Das Rad läuft in einem dicht anliegenden Gehäuse um, das auf der Oberseite eine Einlauföffnung und auf der Unterseite eine Auslauföffnung besitzt. Das zu schleusende Material füllt dabei von oben die einzelnen Zellen und fällt nach einer Drehung von etwa 180° unten wieder heraus, ohne daß eine durchgängige Verbindung zwischen Ein- und Ausgangsöffnung zustande kommt. Nach Passieren des Zellenrades 14 fallen die Fassungsteile in eine Druckluftleitung 15 und werden mittels der von einem Gebläse 16 erzeugten Druckluft in ein Silo 17 gefördert.

Die nichtmagnetischen Bruchstücke gelangen über eine Fördereinrichtung, die ebenfalls in Verbindung mit Fig. 2 noch erläutert werden soll, aus der Sortiereinrichtung 13 in eine Saugleitung 18. Diese führt zu einem Abscheider 19 mit einem zylindrischen Oberteil 19a, einem trichterförmigen Unterteil 19b und einem Deckel 19c. An den Deckel 19c ist eine Absaugvorrichtung 20 über eine Rohrleitung 21 angeschlossen. Es wird ein Absaugstrom erzeugt, der durch den Einlaufschlitz 8 und gegebenenfalls weitere Öffnungen im Gehäuse 3 durch den Trichter 11, die Sortiereinrichtung 13, die Saugleitung 18, den Abscheider 19 und das Rohr 21 in die Absaugvorrichtung 20 führt. Die Absaugvorrichtung 20 hat eine verhältnismäßig hohe Leistung und fördert ein Luftvolumen von beispielsweise 16 m³/min bei einer Fördergeschwindigkeit von beispielsweise 25 m/s im Saugrohr 18. Mit Hilfe eines einstellbaren Bypaßrohres 22 kann dafür gesorgt werden, daß ein Teil des Luftstromes direkt aus dem Gehäuse 3 kommt, so daß die über die Sortiereinrichtung 13 geförderte Luftmenge kleiner wird und ihre Geschwindigkeit abnimmt.

Aufgrund der hohen Luftgeschwindigkeit im Saugrohr 18 werden die nichtmagnetischen Bruchstücke in den Abscheider 19 gefördert und fallen dort durch ein Sieb 23 in das trichterförmige Unterteil 19b. Die Maschenweite des Siebes 23 ist so gewählt, daß gegebenenfalls in der Sortiereinrichtung 13 nicht ausgesonderte Fassungsteile auf dem Sieb 23 hängenbleiben. Der von der Luft mitgerissene Staub gelangt aus dem Abscheider 19 über das Rohr 21 in die Absaugvorrichtung 20 und wird dort in bekannter Weise ausgefiltert. Die nichtmagnetischen Bruchstücke gelangen durch eine weitere Zellenradschleuse 24 am Auslauf des trichterförmigen Teils 19b in einen Ofen 25, der ein kegelförmiges Gehäuse 26, einen Innenkegel 27 und einen Trichter 28 aufweist. Im unteren Bereich des Gehäuses 26 und des Innenkegels 27 ist im Spalt zwischen diesen Teilen ein Gasringbrenner 29 angeordnet. Die nichtmagnetischen Bruchstücke fallen aus der Zellenradschleuse 24 über eine Einfüllöffnung 30 in den kegelmantelförmigen Spalt zwischen dem Gehäuse 25 und dem Innenkegel 27 und werden dort von den heißen Abgasen des Ringbrenners 29 und zum Schluß auch von dessen Flammen erhitzt. Dabei verdampfen anhaftende Verunreinigungen und Schadstoffe. Die Dämpfe verlassen den Ofen 25 zusammen mit den Abgasen über eine einstellbare Zweigleitung 31 der Absaugvorrichtung 20. Nach der Erhitzung fallen die nichtmagnetischen Bruchstücke am Ringbrenner 29 vorbei in den Trichter 28 und von dort über eine Zellenradschleuse 32 in eine Druckluftleitung 33, über die sie mittels Druckluft aus einem Gebläse 34 in ein Silo 35 gefördert werden. Das Gebläse 34 ist nur zur Vereinfachung der Darstellung als getrenntes Gebläse gezeigt. Es kann ein einziges Gebläse anstelle der beiden Gebläse 16, 34 benutzt werden, das beide Druckluftleitungen 15, 33 speist.

Die Abluft der Silos 17, 35 wird über je ein Aktivkohlefilter 36, 37 geführt, die alle schädlichen Abgase zurückhalten. Messungen haben gezeigt, daß die Abluft nur noch Konzentrationen von etwa 0,04 mg/m³ enthält. Gleiches Gleiches gilt für die Abluft der Saugvorrichtung 20, die ebenfalls über ein Aktivkohlefilter 38 geführt wird. Zur Einsparung des Filters 38 kann auch der Abluftkanal 39 der Absaugvorrichtung 20 zur Zuluftseite der beiden Gebläse 16, 34 bzw. einem zusammengefaßten Gebläse geführt werden.

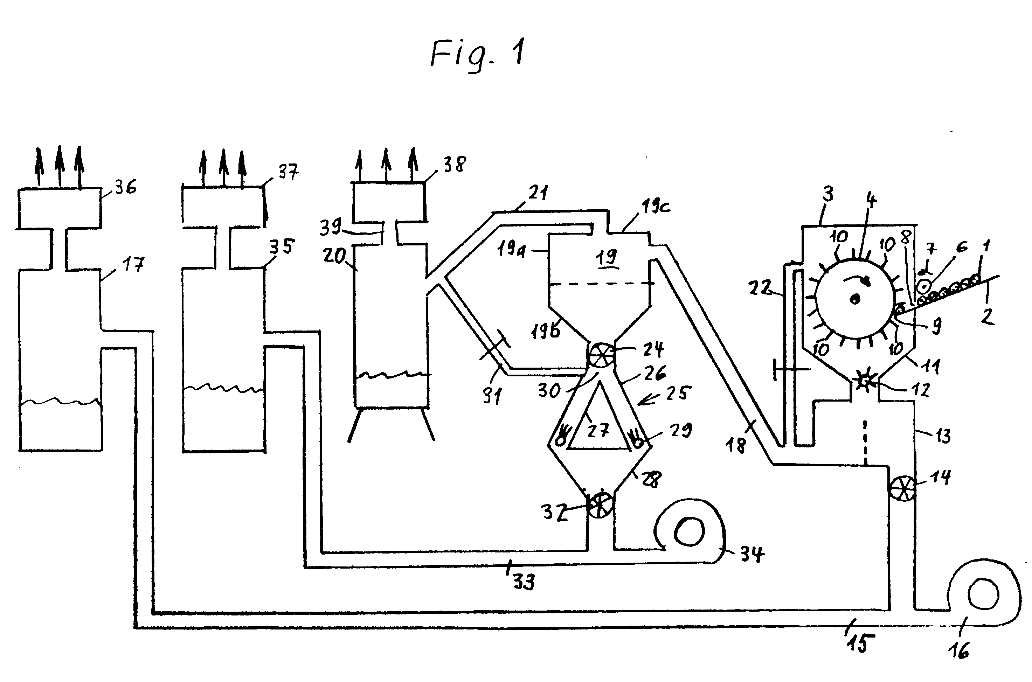

Fig. 2 zeigt ein Ausführungsbeispiel der Sortiereinrichtung 13 . Aus dem trichterförmigen Unterteil 11 des Gehäuses 3 mit Rührwerk 12 gemäß Fig. 1 fallen die Bruchstücke auf ein zwischen zwei Walzen 40 und 41 umlaufendes Transportband 42. Dabei sind schematisch die Fassungsteile als kleine Kreise 43 und die nichtmagnetischen Bruchstücke, also im wesentlichen Glasteile, als kleine Dreiecke 44 dargestellt. Eine Abstreifklappe 45 sorgt dafür, daß die geförderten Teile 44, 45 eine gewisse Schichthöhe nicht übersteigen. Sobald die nichtmagnetischen Bruchstücke die Umlenkwalze 40 erreichen, lösen sie sich vom Transportband 42 und fallen in einen Trichter in Form eines Schachtes 46. Die Umlenkwalze 40 enthält, wie schematisch durch Nord- und Südpole dargestellt, starke Magneten, die die Fassungsteile 43 so lange festhalten, bis das Transportband 42 im unteren Bereich der Umlenkwalze von dieser abläuft. Dann fallen die Fassungsteile 43 in einen sogenannten Kappentrichter 47 und passieren dann die Zellenradschleuse 14, vgl. Fig. 1. Die nichtmagnetischen Bruchstücke 44 fallen über den Schacht 46, auch Glastrichter genannt, in das Oberteil eines Schneckenförderers 48 mit Förderschnecke 49. Wie die schematische Aufsicht gemäß Fig. 3 zeigt, hat die Schnecke 49 großes Spiel im Gehäuse, so daß keine Verklemmungen auftreten können. Gleichzeitig wird mit Hilfe von auf dem Umfang der Schnecke 49 verteilten Nocken 50 ein Rühreffekt mit Zerkleinerung von zu großen Bruchstücken erreicht. Am Ende der Schneckenwelle 51 befindet sich vor dem Ausgang zum Saugrohr 18 (Fig. 1) ein weiterer Rührer 52 mit radialen Armen. Wie die Vorderansicht gemäß Fig. 2 zeigt, ist oberhalb der Schnecke 49 ein verhältnismäßig großer Luftkanal im Schneckenförderer 48 vorhanden, so daß eine große Luftmenge vom Gehäuse 3 durch die Sortiereinrichtung 13 und den Schneckenförderer 48 zur Saugleitung 18 strömen kann. Dieser Saugluftstrom sorgt auch für einen Unterdruck in dem geschlossenen System, das den Schneckenförderer 48 , die Sortiereinrichtung 13 und den Behälter 3 umfaßt.

## Patentansprüche

1. Anlage zur Entsorgung von Leuchtstoff- und Gasdrucklampen mit
folgenden Merkmalen :
a) die Lampen (1) werden einem in einem geschlossenen Gehäuse (3) umlaufenden Schlagrad (4) zum Zerbrechen zugeführt;
b) das Gehäuse (3) weist unterhalb des Schlagrades (4) einen Trichter (11) auf, der die Bruchstücke einer geschlossenen Sortiereinrichtung (13) zuführt;
c) in der Sortiereinrichtung (13) werden die Fassungsteile magnetisch ausgesondert und über eine Schleuse (14) in ein Silo (17) gefördert;
d) die nichtmagnetischen Bruchstücke werden einem geschlossenen Heizraum (25) zugeführt und nach dem Erhitzen über eine Schleuse (32) in ein Silo (35) gefördert;
e) an das Schlagradgehäuse (3), die Sortiereinrichtung (13) und den Heizraum (25) ist eine Absaugvorrichtung (20) mit Staubfilter angeschlossen, deren Abluft zur Beseitigung schädlicher Gase und Dämpfe einem Aktivkohlefilter (38) zugeführt wird.

2. Anlage nach Anspruch 1,
dadurch gekennzeichnet, daß das Schlagrad (4) an einer horizontalen Welle (5) eine Vielzahl von radial abstehenden Schlagarmen (10) aufweist, die in mehreren, gleichmäßigen axialen Abstand besitzenden Reihen angeordnet sind.

3. Anlage nach Anspruch 2,
dadurch gekennzeichnet, daß das Gehäuse (3) einen in Richtung zum Schlagrad (4) geneigten Einlauftisch (2) besitzt, der die zu entsorgenden Lampen (1) durch einen Gehäuseschlitz (8) zum Schlagrad (4) führt.

4. Anlage nach Anspruch 3,
dadurch gekennzeichnet, daß der Einlauftisch (2) an seiner dem Schlagrad (4) zuweisenden Kante mit kammartig angeordneten Winkeln (9) versehen ist, die die Bewegung der Lampen (1) begrenzen, und daß die Enden der Schlagarme (10) zwischen den Winkeln durchlaufen und die Lampen (1) auf ihrer gesamten Länge gleichzeitig zerbrechen.

5. Anlage nach Anspruch 3 oder 4,
dadurch gekennzeichnet, daß oberhalb des Einlauftisches (2) im Bereich des Gehäuseschlitzes (8) eine mit einem Reibbelag versehene Walze (6) parallel zum Tisch (2) angeordnet ist, deren Abstand vom Tisch auf den Durchmesser der Lampen (1) einstellbar ist, und daß die Walze (6) mit einer solchen Drehrichtung (7) angetrieben ist, daß die Lampen(1) entgegen ihrer Einlaufrichtung zurückgehalten und damit vereinzelt werden.

6. Anlage nach einem der Ansprüche 1 bis 5,
dadurch gekennzeichnet, daß im Trichter (11) des Gehäuses (3) ein Rührer (12) in Form einer Welle mit radial abstehenden Armen angeordnet ist.

7. Anlage nach einem der Ansprüche 1 bis 6,
dadurch gekennzeichnet, daß die Sortiereinrichtung (13) ein horizontal zwischen zwei Umlenkwalzen (Fig. 2: 40,41) umlaufendes Transportband (42) aufweist, auf dessen oberes Drum der Trichter (11) des Gehäuses (3) mündet, und daß ein dem Transportband (42) zugeordneter Magnet die Fassungsteile (43) aus den unmagnetischen Bruchstücken (44) aussondert.

8. Anlage nach Anspruch 7,
dadurch gekennzeichnet, daß die Umlenkwalze (40), auf die das obere Drum mit den aufgeschütteten Bruchstücken (43, 44) zuläuft, einen Magneten enthält, derart, daß die Fassungsteile (43) bis zum unteren Ablaufpunkt des Bandes (42) von der Walze (40) magnetisch festgehalten werden und dann in einen Kappentrichter (47) fallen, während die unmagnetischen Bruchstücke (44) im oberen Bereich der Umlenkwalze (40) vom Band (42) in einen Glastrichter (46) gefördert werden.

9. Anlage nach Anspruch 8,
dadurch gekennzeichnet, daß der Kappentrichter (47) in eine Zellenradschleuse (14) mündet und daß die Kappen vom Ausgang der Zellenradschleuse (14) mittels Druckluft (16) über ein Rohr (15) in ihr Silo (17) gefördert werden.

10. Anlage nach Anspruch 8 oder 9,
dadurch gekennzeichnet, daß der Glastrichter (46) in einen Schneckenförderer (48) mündet, an dessen Ausgang eine Saugluftleitung (18) angeschlossen ist, die die unmagnetischen Bruchstücke (44) zum Heizraum (25) fördert.

11. Anlage nach Anspruch 10,
dadurch gekennzeichnet, daß die Schnecke (49) des Förderers (48) großes radiales Spiel im Gehäuse besitzt und am Rand mit Nocken (50) versehen ist und daß das Gehäuse oberhalb der Schnecke (49) einen Luftdurchgangskanal mit großem Querschnitt bildet.

12. Anlage nach Anspruch 10 oder 11,
dadurch gekennzeichnet, daß am Ausgang des Schneckenförderers (48) in dessen Gehäuse ein mit der Schnecke (49) umlaufender Rührer (52) angeordnet ist.

13. Anlage nach Anspruch 10, 11 oder 12,
dadurch gekennzeichnet, daß das Gehäuse (3) des Schlagrades (4), der anschließende Trichter (11), die Sortiereinrichtung (13) und das Gehäuse des Schneckenförderers (48) ein geschlossenes System bilden, das mittels der Saugluftleitung (18) unter Unterdruck gehalten ist.

14. Anlage nach einem der Ansprüche 1 bis 13,
dadurch gekennzeichnet, daß vor dem Heizraum (25) ein Abscheider (19) angeordnet ist, in den die nichtmagnetischen Bruchstücke gefördert werden, und daß der Abscheider (19) ein Sieb (23) zum Zurückhalten restlicher Fassungsteile aufweist.

15. Anlage nach Anspruch 14,
dadurch gekennzeichnet, daß die Absaugvorrichtung (20) an den Abscheider (19) angeschlossen ist und über die Saugluftleitung (18) die unmagnetischen Bruchstücke in den Abscheider (19) fördert.

16. Anlage nach Anspruch 15,
dadurch gekennzeichnet, daß der Abscheider (19) einen oberen zylindrischen Abschnitt (19a) aufweist, an dessen Deckel (19c) die Absaugvorrichtung (20; 21) angeschlossen ist, daß die Saugluftleitung (18) tangential in den zylindrischen Abschnitt (19a) geführt ist und daß sich an den zylindrischen Abschnitt (19a) nach unten ein Trichter (19b) anschließt, der über eine Zellenradschleuse (24) zum Heizraum (25) führt.

17. Anlage nach einem der Ansprüche 1 bis 16,
dadurch gekennzeichnet, daß der Heizraum ein Ofen (25) mit einem kegelförmigen Gehäuse (26) ist, an dessen Spitze eine Einfüllöffnung (30) für die unmagnetischen Bruchstücke angeordnet ist, daß in dem Gehäuse (26) gleichachsig ein Innenkegel (27) mit Abstand von der Gehäusewand befestigt ist und daß ein Gasringbrenner (29) am unteren Rand zwischen dem Gehäuse (26) und dem Innenkegel (27) liegt.

18. Anlage nach Anspruch 17,
dadurch gekennzeichnet, daß der axiale Abstand zwischen dem kegelförmigen Gehäuse (26) und dem Innenkegel (27) einstellbar ist.

19. Anlage nach Anspruch 17 oder 18,
dadurch gekennzeichnet, daß ein Abzweig (31) der Saugvorrichtung (20) in den Bereich der Einfüllöffnung (30) geführt ist.

20. Anlage nach Anspruch 17, 18 oder 19,
dadurch gekennzeichnet, daß unter dem Heizraum ein Trichter (28) angeordnet ist, der in eine Zellenradschleuse (32) mündet, und daß die unmagnetischen Bruchstücke am Ausgang der Zellenradschleuse (32) mittels Druckluft (34) über ein Rohr (33) in ihr Silo (35) gefördert werden.

21. Anlage nach Anspruch 9 und 20,
dadurch gekennzeichnet, daß die Anluftleitungen der Silos (17, 35) über Aktivkohlefilter (36, 37) geführt sind.

22. Anlage nach einem der Ansprüche 9 bis 21,
dadurch gekennzeichnet, daß die Abluft (39) der Absaugvorrichtung (20) als Zuluft einem Gebläse (16, 34) zur Lieferung der Druckluft zugeführt ist.

## Claims

1. A plant for the disposal of fluorescent and gas pressure lamps, having the following features:
(a) the lamps (1) are fed for breaking to a percussion wheel (4) rotating in a closed housing (3);
(b) beneath the percussion wheel (4) the housing (3) has a hopper (11) which feeds the fragments to a closed sorting device (13);
(c) in the sorting device (13) the lampholder parts are magnetically separated and fed to a bin (17) via a lock (14);
(d) the non-magnetic fragments are fed to a closed heating chamber (25) and after heating are fed to a bin (35) via a lock (32);
(e) a suction extraction device (20) with a dust filter is connected to the percussion wheel housing (3), the sorting device (13) and the heating chamber (25) and its outgoing air is fed to an activated carbon filter (38) for the removal of noxious gases and vapours.

2. A plant according to claim 1, characterised in that the percussion wheel (4) has a plurality of radially projecting percussion arms (10) on a horizontal shaft (5), said arms being disposed in a number of rows with uniform axial spacing.

3. A plant according to claim 2, characterised in that the housing (3) has an inlet table (2) inclined towards the percussion wheel (4) to guide the lamps (1) for disposal to the percussion wheel (4) through a housing slot (8).

4. A plant according to claim 3, characterised in that the edge of the inlet table (2) facing the percussion wheel (4) has brackets (9) arranged in the form of a comb to limit the movement of the lamps (1) and in that the ends of the percussion arms (10) pass between the brackets and simultaneously break the lamps (1) over their entire length.

5. A plant according to claim 3 or 4, characterised in that a roller (6) having a friction layer is disposed parallel to the table (2) above the latter in the area of the housing slot (8) and the distance between the roller (6) and the table (2) is adjustable to the diameter of the lamps (1) and in that the roller (6) is driven in a direction (7) of rotation such that the lamps (1) are held back in the opposite direction to their direction of entry and thus separated.

6. A plant according to any one of claims 1 to 5, characterised in that an agitator (12) in the form of a shaft with radially projecting arms is disposed in the hopper (11) of the housing (3).

7. A plant according to any one of claims 1 to 6, characterised in that the sorting device (13) comprises a conveyor belt (42) revolving horizontally between two reversing rollers (Fig. 2: 40, 41), the hopper (11) of the housing (3) discharging on to the top run of said belt (42), and in that a magnet associated with the conveyor belt (42) separates the lampholder parts (43) from the non-magnetic fragments (44).

8. A plant according to claim 7, characterised in that the reversing roller (40) on to which runs the top run with the fragments (43, 44) deposited thereon contains a magnet in such manner that the lampholder parts (43) are magnetically retained as far as the bottom point where the belt (42) moves away from the roller (40) and then drop into a cap hopper (47), while the non-magnetic fragments (44) are fed to a glass hopper (46) in the upper area of the reversing roller (40) by belt (42).

9. A plant according to claim 8, characterised in that the cap hopper (47) discharges into a bucket wheel lock (14) and in that the caps are fed from the outlet of the bucket wheel lock (14) to their bin (17) by means of compressed air (16) via a pipe (15).

10. A plant according to claim 8 or 9, characterised in that the glass hopper (46) discharges into a screw conveyor (48), to the outlet of which a suction air line (18) is connected, which feeds the non-magnetic fragments (44) to the heating chamber (25).

11. A plant according to claim 10, characterised in that the screw (49) of the conveyor (48) has considerable radial clearance in the housing and is provided with lugs (50) at the edge and in that the housing above the screw (49) forms an air passage duct of large cross-section.

12. A plant according to claim 10 or 11, characterised in that an agitator (52) revolving with the screw (49) is disposed at the outlet of the screw conveyor (48) in its housing.

13. A plant according to claim 10, 11 or 12, characterised in that the housing (3) of the percussion wheel (4), the connected hopper (11), the sorting device (13) and the housing of the screw conveyor (48) form a closed system which is kept at negative pressure by means of the suction air line (18).

14. A plant according to any one of claims 1 to 13, characterised in that there is disposed upstream of the heating chamber (25) a separator (19) into which the non-magnetic fragments are fed and in that the separator (19) has a screen (23) to retain remaining lampholder parts.

15. A plant according to claim 14, characterised in that the suction extraction device (20) is connected to the separator (19) and feeds the non-magnetic fragments to the separator (19) via the suction air line (18).

16. A plant according to claim 15, characterised in that the separator (19) comprises an upper cylindrical portion (19a), to the cover (19c) of which the suction extraction device (20, 21) is connected, in that the suction air line (18) passes tangentially into the cylindrical portion (19a) and in that the hopper (19b) is connected at the bottom to the cylindrical portion (19a) and leads via a bucket wheel lock (24) to the heating chamber (25).

17. A plant according to any one of claims 1 to 16, characterised in that the heating chamber is a furnace (25) having a conical housing (26), at the apex of which there is disposed a filling aperture (30) for the non-magnetic fragments, in that an inner cone (27) is secured coaxially in the housing (26) in spaced relationship to the housing wall and in that a gas ring burner (29) is situated at the bottom edge between the housing (26) and the inner cone (27).

18. A plant according to claim 17, characterised in that the axial distance between the conical housing (26) and the inner cone (27) is adjustable.

19. A plant according to claim 17 or 18, characterised in that a branch (31) of the suction device (20) is taken into the area of the filling aperture (30).

20. A plant according to claim 17, 18 or 19, characterised in that a hopper (28) leading into a bucket wheel lock (32) is disposed beneath the heating chamber and in that the non-magnetic fragments are fed at the outlet of the bucket wheel lock (32) into their bin (35) by compressed air (34) via a pipe (33).

21. A plant according to claims 9 and 20, characterised in that the incoming air lines of the bins (17, 35) are taken through activated carbon filters (36, 37).

22. A plant according to any one of claims 9 to 21, characterised in that the outgoing air (39) from the suction extraction device (20) is fed as incoming air to a fan (16, 34) for the delivery of the compressed air.

## Revendications

1. Installation pour la mise au rebut de tubes fluorescents et de lampes sous pression de gaz possédant les caractéristiques suivantes :
a) les lampes (1) sont amenées, en vue d'y être brisées, sur une roue de broyage (4) tournant dans un bâti fermé (3) ;
b) le bâti (3) présente sous la roue de broyage (4) un entonnoir (11), qui conduit les débris à un dispositif de tri fermé (13) ;
c) les morceaux de douilles sont triés magnétiquement dans un dispositif de tri (13) et transportés dans un silo (17) par l'intermédiaire d'une écluse (14) ;
d) les débris non magnétiques sont amenés dans un compartiment de chauffe fermé (25) et, après échauffement, transportés dans un silo (35) à travers une écluse (32);
e) est raccordé au bâti de roue de broyage (3), au dispositif de tri (13) et au compartiment de chauffe (25) pourvu d'un filtre à air, un dispositif d'aspiration (20), dont l'air d'évacuation est conduit sur un filtre à charbon actif (38) en vue d'éliminer les gaz et les vapeurs nocifs.

2. Installation selon la revendication 1,
caractérisée en ce que la roue de broyage (4) comporte sur un arbre horizontal (5) une pluralité de bras de broyage (10) faisant saillie radialement, lesquels sont placés sur plusieurs rangées présentant un écartement axial régulier.

3. Installation selon la revendication 2,
caractérisée en ce que le bâti (3) possède une table d'introduction (2) inclinée en direction de la roue de broyage (4), qui dirige les lampes (1) à mettre au rebut sur la roue de broyage (4) à travers une fente (8) du bâti.

4. Installation selon la revendication 3,
caractérisée en ce que la table d'introduction (2) est, à son arête tournée vers la roue de broyage (4), pourvue d'équerres (9) placées à la manière d'un peigne, lesquelles limitent le mouvement des lampes (11) et en ce que les extrémités des bras de broyage (10) passent entre les équerres et brisent simultanément les lampes (1) sur toute leur longueur.

5. Installation selon la revendication 3 ou 4,
caractérisée en ce qu'au-dessus de la table d'introduction (2) et parallèlement à celle-ci, dans le secteur de la fente (8) du bâti, est, pourvu d'une garniture de friction, placé un rouleau (6), dont la distance à la table peut être réglée sur le diamètre des lampes (1) et en ce que le rouleau (6) est actionné dans un sens de rotation (7), tel que les lampes (1) sont retenues vers leur direction d'introduction et, de ce fait, séparées.

6. Installation selon l'une des revendications 1 à 5,
caractérisée en ce qu'un agitateur (12), sous forme d'un arbre pourvu de bras faisant saillie radialement, est placé dans l'entonnoir (11) du bâti (3).

7. Installation selon l'une des revendications 1 à 6,
caractérisée en ce que le dispositif de tri (13) présente, circulant horizontalement entre deux rouleaux de renvoi (figure 2 : 40,41) une bande transporteuse (42) sur le brin supérieur de laquelle débouche l'entonnoir (11) du bâti (3) et en ce qu'un aimant associé à la bande transporteuse (42) trie en les séparant les morceaux de douilles (43) des débris non magnétiques (44).

8. Installation selon la revendication 7,
caractérisée en ce que le rouleau de renvoi (40), sur lequel se termine le brin supérieur chargé des débris (43,44), comporte un aimant, de telle sorte que les morceaux de douilles (43) sont maintenus magnétiquement par le rouleau (40) jusqu'au point inférieur de déroulement de la bande (42) puis tombent dans un entonnoir pour coiffes (47), tandis que les débris non magnétiques (44) sont, dans la zone supérieure du rouleau de renvoi (40) transportés par la bande (42) dans un entonnoir pour verres (46).

9. Installation selon la revendication 8,
caractérisée en ce que l'entonnoir pour coiffes (47) débouche dans une écluse à roue à godets (14) et en ce que les coiffes sont transportées au moyen d'air comprimé (16), de la sortie de l'écluse à roue à godets (14), à travers un tuyau (15), dans leur silo (17).

10. Installation selon la revendication 8 ou 9,
caractérisée en ce que l'entonnoir pour verres (46) débouche dans un convoyeur à vis (48), à la sortie duquel est raccordée une canalisation d'air aspiré (18), qui transporte sur le compartiment de chauffe (25) les débris non magnétiques (44).

11. Installation selon la revendication 10,
caractérisée en ce que la vis sans fin (49) du convoyeur (48) possède dans le bâti un jeu radial important et est pourvue sur le bord d'ergots (50) et en ce que le bâti forme au-dessus de la vis sans fin (49) un canal de passage d'air de grande section transversale.

12. Installation selon la revendication 10 ou 11,
caractérisée en ce qu'à la sortie du convoyeur à vis (48), dans le bâti de celui-ci, est placé un agitateur (52) tournant avec la vis sans fin (49).

13. Installation selon la revendication 10, 11 ou 12,
caractérisée en ce que le bâti (3) de la roue de broyage (4), l'entonnoir adjacent (11), le dispositif de tri (13) et le bâti du convoyeur à vis (48) constituent un système clos, qui est maintenu sous dépression au moyen de la canalisation d'air aspiré (18).

14. Installation selon l'une des revendications 1 à 13,
caractérisée en ce qu'avant le compartiment de chauffe (25) est placé un collecteur (19), dans lequel sont transportés les débris non magnétiques et en ce que le collecteur (19) comporte un tamis (23) servant à retenir les morceaux de douilles résiduels.

15. Installation selon la revendication 14,
caractérisée en ce que le dispositif d'aspiration (20) est raccordé au collecteur (19) et qu'il transporte, par l'intermédiaire de la canalisation d'air aspiré (18), les débris non magnétiques dans le collecteur (19).

16. Installation selon la revendication 15,
caractérisée en ce que le collecteur (19) présente une partie supérieure cylindrique (19a), au couvercle (19c) de laquelle se raccorde le dispositif d'aspiration (20,21), en ce que la canalisation d'air aspiré (18) arrive tangentiellement dans la partie cylindrique (19a) et en ce qu'à la partie cylindrique (19a) se raccorde vers le bas un entonnoir (19b), qui conduit au compartiment de chauffe (25) par l'intermédiaire d'une écluse à roue à godets (24).

17. Installation selon l'une des revendications 1 à 16,
caractérisée en ce que le compartiment de chauffe est un four (25), dont le bâti a la forme d'un cône, à la pointe duquel se raccorde une ouverture d'entrée (30) pour les débris non magnétiques, en ce que, dans le bâti (26), à distance de la paroi de celui-ci, est fixé un cône interne (27) de même axe et en ce que, sur le bord inférieur, entre le bâti (26) et le cône interne (27) se situe un brûleur à gaz en couronne (29).

18. Installation selon la revendication 17,
caractérisée en ce que la distance axiale entre le bâti en forme de cône (26) et le cône interne (27) est ajustable.

19. Installation selon la revendication 17 ou 18,
caractérisée en ce qu'une dérivation (31) du dispositif d'aspiration (20) est amenée dans le secteur de l'ouverture d'entrée (30).

20. Installation selon la revendication 17, 18 ou 19,
caractérisée en ce que, sous le compartiment de chauffe, est placé un entonnoir (28), qui débouche dans une écluse à roue à godets (32) et en ce que les débris non magnétiques sont, à la sortie de cette écluse à roue à godets (32), transportés à travers un tuyau (33) dans leur silo (35) au moyen d'air comprimé (34).

21. Installation selon la revendication 9 ou 20,
caractérisée en ce que les canalisations d'évacuation d'air des silos (17,35) sont amenées sur des filtres à charbon actif (36,37).

22. Installation selon l'une des revendications 9 à 21,
caractérisée en ce que l'air d'évacuation (39) du dispositif d'aspiration (20) est envoyé, pour servir d'air amené à une soufflerie (16,34), en vue de fournir de l'air comprimé.
